(19) 

**Europäisches Patentamt**
**European Patent Office**
**Office européen des brevets**

(11) **EP 4 258 385 A1**

(12) **EUROPEAN PATENT APPLICATION**
published in accordance with Art. 153(4) EPC

(43) Date of publication:
**11.10.2023 Bulletin 2023/41**

(21) Application number: **21900104.7**

(22) Date of filing: **03.12.2021**

(51) International Patent Classification (IPC):
*H01M 4/38* (2006.01)  *H01M 4/40* (2006.01)
*H01M 10/42* (2006.01)  *H01M 4/134* (2010.01)
*H01M 10/0525* (2010.01)  *H01M 10/0585* (2010.01)

(52) Cooperative Patent Classification (CPC):
**H01M 4/134; H01M 4/38; H01M 4/40;**
**H01M 10/0525; H01M 10/0585; H01M 10/42;**
**Y02E 60/10**

(86) International application number:
**PCT/CN2021/135420**

(87) International publication number:
**WO 2022/117080 (09.06.2022 Gazette 2022/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **04.12.2020  CN 202011401161**

(71) Applicant: **BYD Company Limited**
**Shenzhen, Guangdong 518118 (CN)**

(72) Inventors:
• **MEI, Riguo**
**Shenzhen, Guangdong 518118 (CN)**

• **LIU, Zhengjiao**
**Shenzhen, Guangdong 518118 (CN)**
• **CHANG, Xiaoya**
**Shenzhen, Guangdong 518118 (CN)**
• **WU, Ziwen**
**Shenzhen, Guangdong 518118 (CN)**
• **PAN, Yi**
**Shenzhen, Guangdong 518118 (CN)**

(74) Representative: **DehnsGermany Partnerschaft**
**von Patentanwälten**
**Theresienstraße 6-8**
**80333 München (DE)**

(54) **LITHIUM ION BATTERY AND POWER VEHICLE**

(57)    A lithium-ion battery (1000) and an electric vehicle are provided. The lithium-ion battery (1000) includes a cell formed by stacking N battery unit (1), and at least one negative electrode lithium replenishing agent film (4). The negative electrode lithium replenishing agent film (4) is an independent lithium replenishing electrode including a current collector (400) and a metal lithium film layer (402) arranged on at least one side surface of the current collector (400), or is a metal lithium film layer laminated on a surface of a negative electrode material layer (201). An areal density $\sigma$ of the metal lithium film layer and a self-defined parameter $\theta$ need to satisfy a certain relationship.

FIG. 1a

**Description**

**CROSS-REFERENCE TO RELATED APPLICATIONS**

The present disclosure claims priority to and benefits of Chinese Patent Application No. 202011401161.3, filed on December 4, 2020. The entire content of the above-referenced application is incorporated herein by reference.

**FIELD**

The present disclosure relates to the technical field of lithium-ion batteries, and in particular, to a lithium-ion battery and an electric vehicle.

**BACKGROUND**

Lithium-ion batteries are widely used in portable electronic devices (such as mobile phones, tablet computers, etc.), unmanned aerial vehicles, electric vehicles and other fields because of high energy density, small size, and no memory effect. However, lithium-ion batteries also have their own disadvantages, such as capacity fading. The loss of active lithium is one of the main reasons for the capacity fading of lithium-ion batteries during the cycle. Therefore, measures taken in the industry are generally to add a lithium replenishing agent capable of providing active lithium to the lithium-ion battery system in advance to make up for the irreversible loss of active lithium.

At present, mature lithium replenishing technologies for batteries include negative electrode lithium replenishing, mainly including wet lithium powder replenishing, dry lithium strip, lithium foil replenishing, etc. However, the lithium replenishing effect of such lithium replenishing methods is not easy to control. For example, the lithium replenishing amount of metal lithium should not be too high, otherwise it is necessary to increase the N/P ratio of the positive and negative electrodes of the battery to reduce the risk of lithium plating in the battery. However, a too high N/P ratio may waste a lot of negative electrode materials and reduce the energy density of the battery, which is contrary to the original intention of lithium replenishing, and is not conducive to improving the battery capacity. Therefore, how to precisely control the lithium replenishing amount and the N/P ratio of the battery to realize a controllable design of a battery with a long cycle life has become an urgent problem to be overcome at present.

**SUMMARY**

In view of this, the present disclosure provides a lithium-ion battery and an electric vehicle. The lithium-ion battery has a controllable long cycle life and is not prone to lithium plating.

Specifically, a first aspect of the present disclosure provides a lithium-ion battery, including a cell formed by stacking N battery units, where each of the battery units includes a positive electrode plate, a negative electrode plate, and a separator sandwiched between the positive electrode plate and the negative electrode plate, and two adjacent battery units are separated by the separator; the positive electrode plate includes a positive electrode current collector and a positive electrode material layer arranged on at least one side surface of the positive electrode current collector; the negative electrode plate includes a negative electrode current collector and a negative electrode material layer arranged on at least one side surface of the negative electrode current collector; the positive electrode material layer includes a positive electrode active material, a conductive agent, and a binder; the negative electrode material layer includes a negative electrode active material, a conductive agent, and a binder; the lithium-ion battery further includes at least one negative electrode lithium replenishing agent film, where the at least one negative electrode lithium replenishing agent film is an independent lithium replenishing electrode or a metal lithium film layer laminated on a surface of the negative electrode material layer, and the independent lithium replenishing electrode includes a current collector and a metal lithium film layer arranged on at least one side surface of the current collector;

an areal density $\sigma$ of the metal lithium film layer satisfies the following formula (I), and a parameter $\theta$ satisfying the following formula (II) is defined:

$$\sigma = \frac{N(\alpha + 1 - \eta)\sigma_2 c_2}{nkc_3} \text{ (formula I)}$$

$$\theta = \frac{c_2(1 - \xi_2)\sigma_2(1 - \varepsilon_2) - \sigma(1 + \varepsilon)c_3 k}{c_1(1 + \xi_1)\sigma_1(1 + \varepsilon_1)} \text{ (formula II)}$$

where $\alpha$ represents a ratio of an amount of pre-stored lithium required by the lithium-ion battery with different numbers of cycles to a reversible capacity of N negative electrode plates, where the amount of pre-stored lithium is measured in %, and the reversible capacity is measured in mAh; the areal density of the metal lithium film layer is measured in mAh/g; $\varepsilon$ represents a tolerance of the areal density of the metal lithium film layer; $\sigma_1$ and $\varepsilon_1$ respectively represent an areal density of the positive electrode material layer and a tolerance thereof, and the areal density of the positive electrode material layer is measured in $g/m^2$; $\sigma_2$ and $\varepsilon_2$ respectively represent an areal density of the negative electrode material layer and a tolerance thereof, and the areal density of the negative electrode material layer is measured in $g/m^2$; $c_1$ and $\xi_1$ respectively represent a specific capacity of the positive electrode material layer and a tolerance thereof, and the specific capacity of the positive electrode material layer is measured in mAh/g; $c_2$ and $\xi_2$ respectively represent a specific capacity of the negative electrode material layer and a tolerance thereof, and the specific capacity of the negative electrode material layer is measured in mAh/g; $\eta$ represents first coulombic efficiency of the negative electrode active material; n represents a number of metal lithium film layers in the lithium-ion battery; $c_3$ represents a theoretical specific capacity of the material of the metal lithium film layer, and is measured in mAh/g; k represents a correction factor, and k is a constant ranging from 0.5 to 0.95; and $\theta$ ranges from 1.0 to 1.3.

In the present disclosure, the lithium replenishing amount of the battery may be controlled by precisely controlling the areal density $\sigma$ of the metal lithium film layer, so that a lithium-ion battery with a long cycle life can be controllably designed, and controlling the parameter $\theta$ to be in an appropriate range can avoid the risk of lithium plating in the battery, and enables the battery to have a high capacity and cycle performance.

A second aspect of the present disclosure provides an electric vehicle. The electric vehicle includes the lithium-ion battery according to the first aspect of the present disclosure. Therefore, the mile range of the electric vehicle can be improved, and high safety performance is achieved.

The advantages of the embodiments of the present disclosure will be set forth in the description which follows, and in part will be obvious from the description, or may be learned by the practice of the embodiments of the present disclosure.

## BRIEF DESCRIPTION OF THE DRAWINGS

FIG. 1a to FIG. 1d are schematic structural diagrams of a lithium-ion battery according to implementations of the present disclosure; and
FIG. 2 is a cycle fading curve of a lithium iron phosphate-graphite system battery at different pre-stored lithium levels according to an embodiment of the present disclosure.

## DETAILED DESCRIPTION

The follows are exemplary embodiments of the present invention, and it should be noted that for a person of ordinary skill in the art, a number of improvements and refinements can be made without departing from the principles of the present invention, and these improvements and refinements are also considered to be within the scope of protection of the present invention.

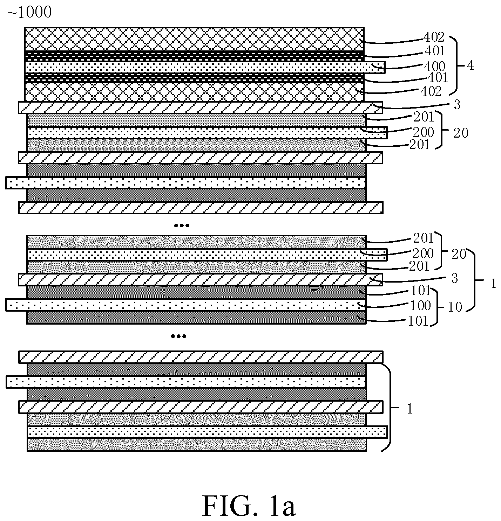

A first aspect of the present disclosure provides a lithium-ion battery 1000. Referring to FIG. 1a to FIG. 1d, the lithium-ion battery 1000 includes a cell formed by stacking N battery units 1. Each of the battery units 1 includes a positive electrode plate 10, a negative electrode plate 20, and a separator 3 sandwiched between the positive electrode plate 10 and the negative electrode plate 20, two adjacent battery units 1 are separated by the separator 3. The positive electrode plate 10 includes a positive electrode current collector 100 and a positive electrode material layer 101 arranged on at least one side surface of the positive electrode current collector 100. The negative electrode plate 20 includes a negative electrode current collector 200 and a negative electrode material layer 201 arranged on at least one side surface of the negative electrode current collector 200. The positive electrode material layer 101 includes a positive electrode active material, a conductive agent, and a binder. The negative electrode material layer 201 includes a negative electrode active material, a conductive agent, and a binder. The positive electrode material layer 101 may be arranged on one side surface of the positive electrode current collector 100, or may be arranged on each of two side surfaces of the positive electrode material layer 101. Similarly, the negative electrode material layer 201 may be arranged on one side surface of the negative electrode material layer 201, or may be arranged on each of two side surfaces of the negative electrode material layer 201.

The lithium-ion battery 1000 further includes at least one negative electrode lithium replenishing agent film 4. The negative electrode lithium replenishing agent film 4 is a metal lithium film layer laminated on a surface of the negative electrode material layer 201, or an independent lithium replenishing electrode including a metal lithium film layer.

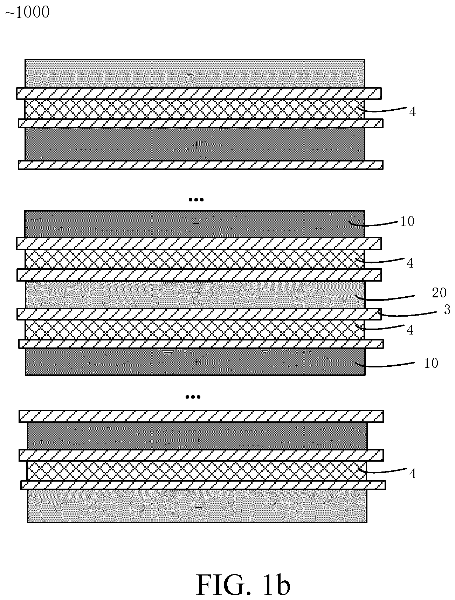

Specifically, in some implementations of the present disclosure, the negative electrode lithium replenishing agent film 4 may be an independent lithium replenishing electrode. Referring to FIG. 1a, the independent lithium replenishing electrode includes a current collector 400 and a metal lithium film layer 402 arranged on at least one side surface of the current collector. The metal lithium film layer 402 may be a lithium elemental layer or a lithium alloy layer. The lithium elemental layer may be in the form of a lithium powder, lithium foil, or lithium strip. The independent lithium replenishing electrode may be arranged at any position of the cell, for example, placed on an outermost side of the cell (as in FIG. 1a) and/or inserted in the cell (in FIG. 1b, the independent lithium replenishing electrode is inserted between a positive electrode plate 10 and a negative electrode plate 20 that neighboring to each other), but it should be noted that the independent lithium replenishing electrode needs to be separated from the negative electrode plate 20 or the positive electrode plate 10 by a separator 3. The independent negative electrode lithium replenishing agent film 4 can avoid the direct arrangement of metal lithium on the negative electrode material layer to cause the metal lithium and the negative electrode material to directly contact and react with each other to generate heat during rolling of the negative electrode plate 20, and prevent the lithium plating when the battery is charged in an insufficient film formation state during pre-lithiation, so as to better realize the controllable release of active lithium ions and realize an ultra-long cycle life. In addition, it should be noted that the independent lithium replenishing electrode needs to be electrically connected with the negative electrode plate 20, specifically, a lithium replenishing electrode tab extending from the current collector 400 of the independent lithium replenishing electrode may be electrically connected with a negative electrode tab extending from the negative electrode plate 20.

In some embodiments, further referring to FIG. 1a, in the negative electrode lithium replenishing agent film 4 existing as the independent lithium replenishing electrode, a heat-sensitive semiconductor layer 401 may be sandwiched between the current collector 400 and the metal lithium film layer 402. That is, in this case, the negative electrode lithium replenishing agent film 4 includes the current collector 400 and the heat-sensitive semiconductor layer 401 and the metal lithium film layer 402 that are sequentially arranged on at least one side surface of the current collector 400. The thermal sensitivity of the heat-sensitive semiconductor layer 401 is mainly embodied in: when the battery is at normal temperature or low temperature, a resistance of the heat-sensitive semiconductor layer 401 is as high as $10^4$ Ohm*m$^2$, and two ends of the coating are substantially electronically insulated, with a leakage current of less than 0.1 $\mu$A/m$^2$; when the temperature of the battery is up to 60°C, the resistance of the coating is less than $10^{-3}$ Ohm*m$^2$, and the two ends of the coating are electronically conductive. In this way, the heat-sensitive semiconductor layer 401 conducts electricity only under high temperature conditions, so that a path is formed between the metal lithium film layer 402 and the current collector 400, and active lithium is released from the metal lithium film layer 402 and intercalated in the negative electrode plate of the battery. In addition, the amount of active lithium released may be controlled based on an external voltage.

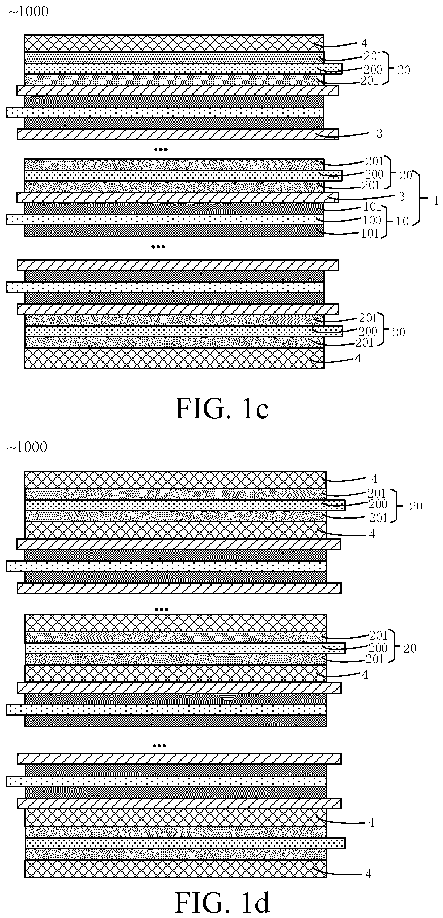

In other implementations of the present disclosure, the negative electrode lithium replenishing agent film 4 may be in direct contact with the negative electrode material layer 201 (see FIG. 1c and FIG. 1d). In this case, the negative electrode lithium replenishing agent film 4 is a non-independent metal lithium film layer, and may specifically be a lithium elemental layer or a lithium alloy layer, where the lithium elemental layer may be in the form of a lithium powder, lithium foil, or lithium strip. In the lithium-ion battery 1000, the metal lithium film layer may be located only on surfaces of some negative electrode material layers 201 facing away from the corresponding negative electrode current collectors 200 (see FIG. 1c), or the negative electrode lithium replenishing agent film 4 may be arranged on surfaces of the negative electrode material layers 201 of all negative electrode plates 20 (see FIG. 1d), etc.

In the present disclosure, an areal density $\sigma$ of the metal lithium film layer in the negative electrode lithium replenishing agent film 4 satisfies the following formula (I), and a parameter $\theta$ satisfying the following formula (II) is defined:

$$\sigma = \frac{N(\alpha + 1 - \eta)\sigma_2 c_2}{nkc_3} \text{ (formula I)}$$

$$\theta = \frac{c_2(1 - \xi_2)\sigma_2(1 - \varepsilon_2) - \sigma(1 + \varepsilon)c_3 k}{c_1(1 + \xi_1)\sigma_1(1 + \varepsilon_1)} \text{ (formula II)}$$

where $\alpha$ represents a ratio of an amount of pre-stored lithium required by the lithium-ion battery with different numbers of cycles to a reversible capacity of N negative electrode plates 20, where the amount of pre-stored lithium is measured in %, and the reversible capacity is measured in mAh; $\sigma_1$ and $\varepsilon_1$ respectively represent an areal density of the positive electrode material layer 101 and a tolerance thereof, $\sigma_2$ and $\varepsilon_2$ respectively represent an areal density of the negative electrode material layer 201 and a tolerance thereof, $c_1$ and $\xi_1$ respectively represent a specific capacity of the positive electrode material layer 101 and a tolerance thereof, $c_2$ and $\xi_2$ respectively represent a specific capacity of the negative electrode material layer 201 and a tolerance thereof, $\eta$ represents first coulombic efficiency of the negative electrode active material, n represents a number of metal lithium film layers in the lithium-ion battery, $c_3$ represents a theoretical specific capacity of the material of the metal lithium film layer, k represents a correction factor, and k is a constant ranging from 0.5 to 0.95; and $\theta$ ranges from 1.0 to 1.3.

In the present disclosure, the lithium replenishing amount of the battery may be controlled by precisely controlling the areal density $\sigma$ of the metal lithium film layer, so that a long cycle life of the lithium-ion battery 1000 can be controllably designed, and controlling the parameter $\theta$ to be in an appropriate range can avoid the risk of lithium plating in the battery, and enables the battery to have a high capacity and energy density. The parameter $\theta$ can reflect a ratio of remaining vacancies capable of accommodating lithium ions in the negative electrode to vacancies capable of accommodating lithium ions in the positive electrode in the pre-lithiated battery. If the value of $\theta$ is too low, there is a risk of lithium plating on the negative electrode plate 20 during charging. If the value of $\theta$ is too high, the amount of material coated on the negative electrode plate 20 is too large, reducing the energy density of the battery. Through comprehensive consideration in the present disclosure, $\theta$ controlled in the range of 1.0 to 1.3 can achieve a low risk of lithium plating and a high capacity. For example, $\theta$ may be 1.05, 1.1, 1.12, 1.2, 1.3, etc. In some embodiments, the $\theta$ may range from 1.07 to 1.15.

The areal density $\sigma_1$ of the positive electrode material layer and the areal density $\sigma_2$ of the negative electrode material layer are design parameters of the lithium-ion battery, and can be determined in combination with $\theta$. The tolerances $\varepsilon_1$, $\varepsilon_2$, and $\varepsilon$ are empirical values, generally measured in %, and may be determined according to specific preparation processes of the positive electrode material layer 101, the negative electrode material layer 201, and the metal lithium film layer. The above parameters $c_1$, $\xi_1$, $c_2$, $\xi_2$, and $\eta$ are measured values, and are obtained by electrochemical testing of coin cells prepared by assembling the positive electrode plate 10 or the negative electrode plate 20 with a lithium metal plate respectively. The tolerances $\xi_1$ and $\xi_2$ are also generally measured in %. The areal density $\sigma_1$, $\sigma_2$, and $\sigma$ may be measured in $g/m^2$, $c_1$, $c_2$, and $c_3$ may be measured in mAh/g, and the parameter $c_3$ of metal lithium elemental is 3860 mAh/g. In some implementations of the present disclosure, the tolerances $\varepsilon 1$, $\varepsilon 2$, $\varepsilon$, $\xi_1$ and $\xi_2$ generally do not exceed 5%, and for example, range from 1% to 3%.

The correction factor K is an empirical value and may be determined according to the form of the metal lithium film layer in the negative electrode lithium replenishing agent film 4. For example, when the metal lithium film layer is a lithium powder layer obtained by wet coating a metal lithium powder, the value of k generally ranges from 0.5 to 0.85; when the metal lithium film layer is a dry-pressed lithium foil or lithium strip, the value of k generally ranges from 0.8 to 0.95; when the metal lithium film layer is a lithium alloy, the value of k generally ranges from 0.6 to 0.9.

The parameter $\alpha$ reflects the pre-stored lithium level of the battery. The term "amount of pre-stored lithium" represents a ratio of a lithium replenishing capacity of the negative electrode lithium replenishing agent film 4 to an irreversible capacity of the negative electrode plate 20 of the battery. The lithium replenishing capacity of the negative electrode lithium replenishing agent film 4 refers to an amount of lithium that can be deintercalated for the first time. Generally, when the number of cycles required by the battery increases, the value of $\alpha$ also increases. When $\alpha$ is equal to 0, it indicates that the lithium replenishing capacity of the negative electrode lithium replenishing agent film 4 is exactly equal to the irreversible capacity of a plurality of negative electrode plates 20 in the battery. A correspondence between the number of cycles c of the lithium-ion battery and the parameter $\alpha$ will be described in detail in Example 1 below. In some implementations of the present disclosure, $\alpha$ ranges from 0 to 18%. For example, $\alpha$ may be 0, 2%, 4%, 6%, 8%, 10%, 12%, 15%, or 18%. In some other implementations of the present disclosure, $\alpha$ ranges from 4% to 15%.

In some implementations of the present disclosure, the metal lithium film layer may have a patterned structure. For example, the lithium foil or lithium strip may have a porous structure. The patterned structure is beneficial to the wetting of the metal lithium film layer in an electrolyte solution and the release of gas during formation of an SEI film on the negative electrode in the pre-lithiation process, so as to prevent the detachment of the metal lithium film layer from the surface of the negative electrode.

In an implementation of the present disclosure, a plurality of through holes may be provided on the separator 3. The through holes can ensure that lithium ions can successfully intercalate or deintercalate through the separator during rapid charge and discharge of the battery. The through holes may have a porosity of 40% to 50%. The material of the separator may be a commonly used material such as PP and PE.

In an implementation of the present disclosure, the positive electrode current collector 100, the negative electrode current collector 200, and the current collector 400 of the negative electrode lithium replenishing agent film 4 may include, but are not limited to, a metallic elemental foil or an alloy foil. The metallic elemental foil includes a copper, titanium, aluminum, platinum, iridium, ruthenium, nickel, tungsten, tantalum, gold, or silver foil. The alloy foil includes stainless steel, or an alloy containing at least one of copper, titanium, aluminum, platinum, iridium, ruthenium, nickel, tungsten, tantalum, gold, or silver. In some implementations of the present disclosure, these elements are the main composition of the alloy foil. The positive electrode current collector 100 and/or the negative electrode current collector 200 may be etched or coarsened to form a secondary structure to facilitate effective contact with the corresponding electrode material layer. Generally, the positive electrode current collector 100 is an aluminum foil, and the negative electrode current collector 200 is a copper foil. The current collector 400 of the negative electrode lithium replenishing agent film 4 may be a copper foil.

For the lithium-ion battery, the positive electrode active material may be at least one of lithium iron phosphate, lithium manganese phosphate, lithium manganese iron phosphate, lithium vanadium phosphate, lithium cobalt phos-

phate, lithium cobaltate ($LiCoO_2$), lithium manganate, lithium manganese nickelate, lithium nickel manganese oxide, nickel cobalt manganese (NCM), nickel cobalt aluminum (NCA), etc. The negative electrode active material may include at least one of graphite, hard carbon, a silicon-based material (including elemental silicon, silicon alloy, silicon oxide, and silicon-carbon composite material), a tin-based material (including elemental tin, tin oxide, and tin-based alloy), $Li_4Ti_5O_{12}$, $TiO_2$, etc.

In the present disclosure, the conductive agent and the binder are conventional choices in the battery field. For example, the conductive agent may include at least one of carbon nanotubes, carbon black, and graphene. The binder may be selected from one or more of polyvinylidene fluoride (PVDF), polytetrafluoroethylene (PTFE), polyvinyl alcohol (PVA), styrene butadiene rubber (SBR), polyacrylonitrile (PAN), polyimide (PI), polyacrylic acid (PAA), polyacrylate, polyolefin, sodium carboxymethyl cellulose (CMC), and sodium alginate.

In an implementation of the present disclosure, the lithium-ion battery 1000 may further include a battery case and an electrolyte solution. The electrolyte solution and the cell including the battery units 1 and the negative electrode lithium replenishing agent film 4 are packaged in the battery case. The cell is soaked in the electrolyte solution. The battery case may be made of an aluminum-plastic composite film.

The lithium-ion battery provided in the embodiments of the present disclosure has a high capacity, a long cycle life, and a low risk of lithium plating at the same time.

A second aspect of the present disclosure provides an electric vehicle. The electric vehicle includes the lithium-ion battery according to the first aspect of the present disclosure. Therefore, the mile range of the electric vehicle can be improved, and high safety performance is achieved.

The embodiments of the present disclosure are further described below with reference to a plurality of examples.

**Example 1**

A lithium-ion battery had a structure shown in FIG. 1a. A method for preparing the lithium-ion battery included the following steps.

(1) Fabrication of a laminated cell of the battery:

a. A positive electrode plate using lithium iron phosphate as a positive electrode active material and including a positive electrode material layer with an areal density $\sigma_1$ of 350 $g/m^2$ and a compaction density of 2.4 $g/m^3$ was prepared, a specific preparation process was as follows: lithium iron phosphate, carbon nanotubes, and a binder PVDF were weighted according to a mass ratio of 96:2:2, dissolved in a solvent N-methylpyrrolidone (NMP), and fully dispersed to obtain a positive electrode slurry. The positive electrode slurry was coated on a surface of an aluminum foil, dried, rolled, and cut to obtain a positive electrode plate with a positive electrode material layer. A deviation $\varepsilon_1$ (%) of $\sigma_1$ was 1%.

b. A negative electrode plate using natural graphite as a negative electrode active material and having a negative electrode material layer with an areal density $\sigma_2$ of 206 $g/m^2$, a deviation $\varepsilon_2$ of $\sigma_2$ being 1%, and a compaction density of 1.5 $g/m^3$ was prepared, a specific preparation process was as follows: graphite, a conductive agent super P, and a binder SBR were mixed in water according to a weight ratio of 96:2:2 to obtain a negative electrode slurry. The negative electrode slurry was coated on two sides of a copper foil, dried, rolled, and cut to obtain a negative electrode plate with a negative electrode material layer.

c. The positive electrode plate, a separator (where the separator included a PE base film and ceramic layers formed on upper and lower surfaces of the PE base film, the PE base film had a thickness of 40 microns, and a total thickness of the ceramic layers on the two sides was 5 microns), and the negative electrode plate were stacked in sequence to obtain a battery unit; N (N=3) battery units were obtained in a similar manner, and stacked together in to obtain a laminated cell, two adjacent battery units being separated by a separator.

(2) Fabrication of an independent lithium replenishing electrode:

Two side surfaces of the current collector 400 (specifically a copper foil) was coated with a dense semiconductor material having a composition of $ZnO:NiO:Al_2O_3:Fe_2O_3$=0.3:0.3:0.3:0.1 (by mass), and sintered at a high temperature of 800°C for 24 h to obtain a heat-sensitive semiconductor layer 401 with a thickness of 80-120 nm. Then, a metal lithium film layer 402 with an areal density of 1.98 $g/m^2$ (specifically a lithium foil, the areal density of which may be calculated according to the aforementioned formula, which will be described in detail below) was arranged on the heat-sensitive semiconductor layer 401 for lithium replenishing, to obtain an independent lithium replenishing electrode.

(3) One independent lithium replenishing electrode was arranged on an outermost side of the laminated cell in step (1), then a tab of the lithium replenishing electrode and a negative electrode tab were welded together, followed by packaging with an aluminum-plastic film to form a pouch battery. Solution of 1.0 mol/L of $LiPF_6$ in vinyl carbonate (EC):dimethyl carbonate (DMC) = 1:1 to 1:5 (volume ratio) was used as an electrolyte solution. Then the electrolyte solution was injected into the battery, and the battery was sealed to obtain a full cell.

After the formation and capacity checking of the assembled full cell of Example 1 were completed at room temperature, the SOC state of the battery was adjusted to 10%. Then the battery was heated to 60°C, and allowed to stand for 12 h, in this case, the heat-sensitive semiconductor layer conducted electricity, a path was formed between metal lithium and the current collector, and active lithium was released from the independent lithium replenishing electrode and intercalated into the graphite negative electrode. The voltage of the battery was monitored to control and adjust the lithium replenishing amount. When the open-circuit voltage of the battery rose by 0.2 V, the heating was stopped. Then the battery was cooled to 25°C. As such, the pre-lithiation of the full cell was completed. Afterward, the full cell was tested for battery capacity, cycle performance, etc.

It should be noted that in Example 1 of the present disclosure, the areal density $\sigma$ = 1.98 g/m$^2$ of the metal lithium film layer 402 of the independent lithium replenishing electrode is calculated based on the above formulas I and II: The parameter $\theta$ was controlled at 1.12, N=3, n=2, the correction factor k was 0.8, $c_3$ of the lithium metal element was 3860 mAh/g, the specific capacity $c_1$ of the positive electrode material layer was 148 mAh/g, the tolerance $\xi_1$ of the specific capacity $c_1$ was 2%, the specific capacity $c_2$ of the negative electrode material layer was 330 mAh/g, the tolerance $\xi_2$ of the specific capacity $c_2$ was 2%, the first efficiency $\eta$ was 94%, the pre-stored lithium level $\alpha$ required by the lithium-ion battery when the number of cycles was 3000 was 0%, and $\varepsilon_1$, $\varepsilon_2$, $\varepsilon$ were 1%. The parameters $c_1$, $\xi_1$, $c_2$, $\xi_2$, and $\eta$ were obtained by electrochemical testing of coin cells prepared by assembling the positive electrode plate 10 or the negative electrode plate 20 with a lithium metal plate respectively. Test conditions were as follows: charging and discharging at a constant current of 0.1 C, a voltage window of a coin cell prepared from the positive electrode plate being 2.5 to 3.8 V, and a voltage window of a coin cell prepared from the negative electrode plate being 0.005 to 1.5 V

In embodiments of the present disclosure, $\alpha$ was obtained by the applicant of the present disclosure according to a mapping relationship between batteries with different pre-stored lithium levels $\alpha$ and the number of cycles c when the capacity retention rates of the batteries drop to 80%, as shown in Table 1 below.

Table 1. Empirical comparison table between the number of cycles and $\alpha$ of a lithium iron phosphate-graphite system battery

| Number of cycles c | 6000 | 7000 | 9000 | 10500 | 12000 | 13000 | 15000 |
|---|---|---|---|---|---|---|---|
| $\alpha$ | 0% | 4% | 6% | 8% | 10% | 13% | 18% |

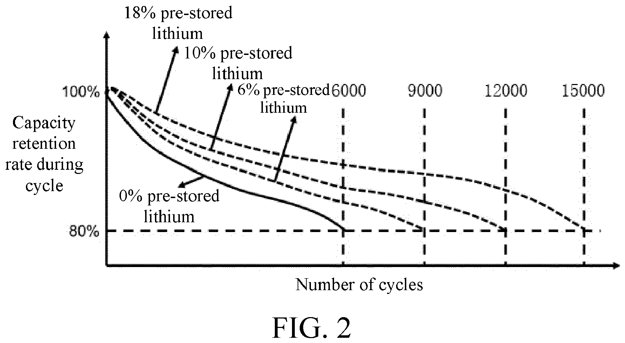

Table 1 above is a cycle fading curve (see FIG. 2) of batteries with different values of $\alpha$, which is obtained according to the battery system of Example 1. The ordinate of the cycle fading curve is the capacity retention rate of the battery during the cycle, and the abscissa is the number of cycles. When $\alpha$=6%, $\theta$=1.12, and the areal density of the graphite negative electrode layer was 206 g/m$^2$, the areal density of the metal lithium film layer can be calculated according to the above formulas as 4.42 g/m$^2$, and the lithium replenishing battery shown in FIG. 1a was prepared with this areal density. Similarly, when $\alpha$=10%, the areal density of the metal lithium film layer was 6.38 g/m$^2$; when $\alpha$=18%, the areal density of the metal lithium film layer was 11.48 g/m$^2$. These batteries were charged to 3.8 V at a constant current of 0.5 C and a constant voltage, allowed to stand for 10 min, then discharged to 2.0 V at a constant current of 0.5 C, and allowed to stand for 10 min. The above charge-discharge process was cyclically carried out, and the testing was stopped when the capacity retention rate dropped to 80%. The capacity retention rate of each cycle was obtained by dividing the capacity of each cycle by the capacity of the first cycle. As such, the comparison table shown in Table 1 can be obtained.

**Example 2**

The lithium-ion battery of Example 2 differs from Example 1 in that: The areal density of the metal lithium film layer in the independent lithium replenishing electrode was 4.42 g/m$^2$, and the areal density of the negative electrode material layer was 230 g/m$^2$, and $\alpha$=6%.

**Example 3**

The lithium-ion battery of Example 3 differs from Example 1 in that: The areal density of the metal lithium film layer in the independent lithium replenishing electrode was 6.38 g/m$^2$, and the areal density of the negative electrode material layer was 249 g/m$^2$, and $\alpha$=10%.

**Example 4**

The lithium-ion battery of Example 4 differs from Example 1 in that: The areal density of the metal lithium film layer in the independent lithium replenishing electrode was 11.48 g/m$^2$, and the areal density of the negative electrode material layer was 299 g/m$^2$, and $\alpha$=18%.

**Example 5**

The lithium-ion battery of Example 5 differs from Example 2 in that: two independent lithium replenishing electrodes (n=4) were provided, the areal density of the metal lithium film layer was 1.98 g/m$^2$, the two independent lithium replenishing electrodes were respectively located on the two outermost side of the entire cell, and the areal density of the negative electrode material layer was 206 g/m$^2$.

**Example 6**

The lithium-ion battery of Example 6 differs from Example 1 in that: the independent lithium replenishing electrode included a current collector and a metal lithium film layer arranged on each of two side surfaces of the current collector, and did not include a heat-sensitive semiconductor layer.

**Example** 7

The lithium-ion battery of Example 7 differs from Example 6 in that: two independent lithium replenishing electrodes (n=4) were provided, the areal density of the metal lithium film layer was 0.94 g/m$^2$, the two independent lithium replenishing electrodes were respectively located on the two outermost sides of the entire cell, and the areal density of the negative electrode material layer was 196 g/m$^2$.

**Example 8**

The lithium-ion battery of Example 8 differs from Example 1 in that: the negative electrode lithium replenishing agent film was a lithium foil layer, directly attached to surfaces of two negative electrode material layers of the negative electrode plate on an outermost side of the cell (n=2).

**Example 9**

The lithium-ion battery of Example 9 (the structure diagram is shown in FIG. 1c) differs from Example 8 in that: two negative electrode lithium replenishing agent films were provided, which were respectively laminated on surfaces of two negative electrode material layers of the negative electrode plates on two outermost sides of the cell (n=4), the areal density of the lithium foil layer was 0.94 g/m$^2$, and the areal density of the negative electrode material layer was 196 g/m$^2$.

**Example 10**

The lithium-ion battery of Example 10 differs from Example 2 in that: the areal density of the metal lithium film layer in the independent lithium replenishing electrode was 4.14 g/m$^2$, the areal density of the negative electrode material layer was 215 g/m$^2$, and the value of the parameter $\theta$ was 1.05.

**Example 11**

The lithium-ion battery of Example 11 differs from Example 2 in that: the areal density of the metal lithium film layer in the independent lithium replenishing electrode was 4.92 g/m$^2$, the areal density of the negative electrode material layer was 256 g/m$^2$, and the value of the parameter $\theta$ was 1.25.

Table 2. Electrochemical testing results of lithium-ion batteries

| Examples | Discharge capacity/mAh | Number of cycles | Energy density (/mWh/g) |
| --- | --- | --- | --- |
| Example 1 | 646 | 6000 | 219 |
| Example 2 | 652 | 9000 | 213 |

(continued)

| Examples | Discharge capacity/mAh | Number of cycles | Energy density (/mWh/g) |
|---|---|---|---|
| Example 3 | 649 | 12000 | 207 |
| Example 4 | 650 | 15000 | 194 |
| Example 5 | 663 | 9200 | 224 |
| Example 6 | 635 | 5700 | 216 |
| Example 7 | 642 | 5850 | 221 |
| Example 8 | 630 | 5600 | 215 |
| Example 9 | 636 | 5800 | 220 |
| Example 10 | 652 | 9000 | 218 |
| Example 11 | 651 | 9000 | 205 |

Table 2 summarizes the electrochemical testing results of the batteries of the above examples. A method for testing discharge capacities of the batteries was as follows: at room temperature, each battery was charged at a constant current of 0.2 C and a constant voltage to 3.8 V, to a cutoff current of 0.05 C, allowed to stand for 10 min, then discharged to 2.0 V at a constant current of 0.2 C, and allowed to stand for 10 min, the charge-discharge process was repeated three times, to obtain a stable discharge capacity. A method for testing cycle performance of the batteries was as follows: at room temperature, each battery was charged to 3.8 V at a constant current of 0.5 C, allowed to stand for 10 min, then discharged to 2.0 V at a constant current of 0.5 C, and allowed to stand for 10 min, the above charge-discharge process was cyclically carried out, and the testing was stopped when the capacity retention rate dropped to 80%. The energy density of the battery was calculated based on the weight of the cell.

As can be seen from Table 2, different cycle life of batteries can be achieved using different amount of pre-stored lithium. A higher pre-stored lithium level $\alpha$ indicates a longer cycle life of the battery. In addition, as can be seen from the comparison between Example 1 and Examples 6 to 9, when the lithium replenishing agent film of the battery was an independent lithium replenishing electrode with a heat-sensitive semiconductor layer, both the capacity and cycle life of the battery reached optimum at the same pre-stored lithium level, and were substantially close to an expected cycle life corresponding to $\alpha$; while the actual cycle life in Examples 6 to 9 was slightly shorter than the expected cycle life corresponding to $\alpha$. Moreover, as can be seen from Examples 2, 10 and 11, when the value of the parameter $\theta$ was too large, the cycle life and capacity of the battery were not greatly changed, but the energy density of the battery was reduced due to the increase of the weight of the negative electrode material. In the present disclosure, controlling the value of $\theta$ to be within the range of 1.0 to 1.2 can enable the battery to reach a high energy density as much as possible while having a long cycle life.

The above-described embodiments are merely illustrative of several implementations of the present disclosure, and the description is specific and particular, but is not to be construed as limiting the scope of the present disclosure. It should be pointed out that for those of ordinary skill in the art, several variations and improvements can be made without departing from the concept of the present disclosure, which are all regarded as falling within the protection scope of the present disclosure. Therefore, the protection scope of the present disclosure is defined by the appended claims.

## Claims

1. A lithium-ion battery, comprising a cell formed by stacking N battery units, wherein each of the battery units comprises a positive electrode plate, a negative electrode plate, and a separator sandwiched between the positive electrode plate and the negative electrode plate, and two adjacent battery units are separated by a separator; the positive electrode plate comprises a positive electrode current collector and a positive electrode material layer arranged on at least one side surface of the positive electrode current collector; the negative electrode plate comprises a negative electrode current collector and a negative electrode material layer arranged on at least one side surface of the negative electrode current collector; the positive electrode material layer comprises a positive electrode active material, a conductive agent, and a binder; the negative electrode material layer comprises a negative electrode active material, a conductive agent, and a binder; the lithium-ion battery further comprises at least one negative electrode lithium replenishing agent film, wherein the at least one negative electrode lithium replenishing agent film is an independent lithium replenishing electrode or a metal lithium film layer laminated on a surface of the negative electrode material layer, and the independent lithium replenishing electrode comprises a current collector and a metal lithium film layer arranged on at least one side surface of the current collector;

an areal density $\sigma$ of the metal lithium film layer satisfies the following formula (I), and a parameter $\theta$ satisfying the following formula (II) is defined:

$$\sigma = \frac{N(\alpha + 1 - \eta)\sigma_2 c_2}{nkc_3} \quad \text{(formula I)}$$

$$\theta = \frac{c_2(1 - \xi_2)\sigma_2(1 - \varepsilon_2) - \sigma(1 + \varepsilon)c_3 k}{c_1(1 + \xi_1)\sigma_1(1 + \varepsilon_1)} \quad \text{(formula II)}$$

wherein $\alpha$ represents a ratio of an amount of pre-stored lithium required by the lithium-ion battery with different numbers of cycles to a reversible capacity of N negative electrode plates, wherein the amount of pre-stored lithium is measured in %, and the reversible capacity is measured in mAh;
the areal density of the metal lithium film layer is measured in mAh/g;
$\varepsilon$ represents a tolerance of the areal density of the metal lithium film layer;
$\sigma_1$ and $\varepsilon_1$ respectively represent an areal density of the positive electrode material layer and a tolerance thereof, and the areal density of the positive electrode material layer is measured in g/m$^2$;
$\sigma_2$ and $\varepsilon_2$ respectively represent an areal density of the negative electrode material layer and a tolerance thereof, and the areal density of the negative electrode material layer is measured in g/m$^2$;
$c_1$ and $\xi_1$ respectively represent a specific capacity of the positive electrode material layer and a tolerance thereof, and the specific capacity of the positive electrode material layer is measured in mAh/g;
$c_2$ and $\xi_2$ respectively represent a specific capacity of the negative electrode material layer and a tolerance thereof, and the specific capacity of the negative electrode material layer is measured in mAh/g;
$\eta$ represents first coulombic efficiency of the negative electrode active material;
n represents a number of metal lithium film layers in the lithium-ion battery;
$c_3$ represents a theoretical specific capacity of the material of the metal lithium film layer, and is measured in mAh/g;
k represents a correction factor, and k is a constant ranging from 0.5 to 0.95; and $\theta$ ranges from 1.0 to 1.3.

2. The lithium-ion battery according to claim 1, wherein $\alpha$ ranges from 0 to 18%.

3. The lithium-ion battery according to claim 1 or 2, wherein the metal lithium film layer is a lithium elemental layer or a lithium alloy layer, and the lithium elemental layer is in the form of a lithium powder, lithium foil, or lithium strip.

4. The lithium-ion battery according to any one of claims 1 to 3, wherein when the metal lithium film layer is a lithium strip or a lithium foil, k ranges from 0.8 to 0.95; when the metal lithium film layer is a lithium powder layer, k ranges from 0.5 to 0.85; and when the metal lithium film layer is a lithium alloy, k ranges from 0.6 to 0.9.

5. The lithium-ion battery according to any one of claims 1 to 4, wherein the independent lithium replenishing electrode further comprises at least one heat-sensitive semiconductor layer, and the at least one heat-sensitive semiconductor layer is sandwiched between the current collector and the metal lithium film layer.

6. The lithium-ion battery according to any one of claims 1 to 5, wherein the independent lithium replenishing electrode is arranged at any position of the cell and is separated from the positive electrode plate or the negative electrode plate by the separator.

7. The lithium-ion battery according to any one of claims 1 to 6, wherein the independent lithium replenishing electrode is inserted between the positive electrode plate and the negative electrode plate that neighboring to each other, and/or arranged on an outermost side of the cell.

8. The lithium-ion battery according to any one of claims 1 to 7, wherein the metal lithium film layer has a patterned structure.

9. The lithium-ion battery according to any one of claims 1 to 8, wherein $\theta$ ranges from 1.07 to 1.15.

**10.** An electric vehicle, comprising the lithium-ion battery according to any one of claims 1 to 9.

~1000

FIG. 1a

~1000

FIG. 1b

~1000

FIG. 1c

~1000

FIG. 1d

FIG. 2

## INTERNATIONAL SEARCH REPORT

| International application No. |
| --- |
| **PCT/CN2021/135420** |

| | |
| --- | --- |
| **A.** | **CLASSIFICATION OF SUBJECT MATTER** |
| | H01M 4/38(2006.01)i; H01M 4/40(2006.01)i; H01M 10/42(2006.01)i; H01M 4/134(2010.01)i; H01M 10/0525(2010.01)i; H01M 10/0585(2010.01)i |
| | According to International Patent Classification (IPC) or to both national classification and IPC |

| | |
| --- | --- |
| **B.** | **FIELDS SEARCHED** |
| | Minimum documentation searched (classification system followed by classification symbols) |
| | H01M |
| | Documentation searched other than minimum documentation to the extent that such documents are included in the fields searched |
| | Electronic data base consulted during the international search (name of data base and, where practicable, search terms used) |
| | WPI, EPODOC, CNPAT, CNKI: 锂离子, 电池, 单元, 堆叠, 电芯, 负极, 补锂, 锂膜, 集流体, 电极, 面密度, lithium ion, battery, cell, stack, laminat+, core, negative electrode, lithium supplement+, lithium film, current collector, electrode, areal density |

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | CN 108539124 A (BEIJING WELION NEW ENERGY TECHNOLOGY CO., LTD.) 14 September 2018 (2018-09-14) description, paragraphs 8-43, and figures 1-4 | 1-10 |
| A | CN 109244355 A (CHINA ENERGY LITHIUM CO., LTD.) 18 January 2019 (2019-01-18) entire document | 1-10 |
| A | CN 112018324 A (NINGDE CONTEMPORARY AMPEREX TECHNOLOGY CO., LTD.) 01 December 2020 (2020-12-01) entire document | 1-10 |
| A | CN 101138058 A (FUJI HEAVY INDUSTRIES LTD.) 05 March 2008 (2008-03-05) entire document | 1-10 |
| A | US 2018076451 A1 (LG CHEM, LTD.) 15 March 2018 (2018-03-15) entire document | 1-10 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 February 2022** | **08 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/135420**

| Patent document cited in search report | | | Publication date (day/month/year) | Patent family member(s) | | | Publication date (day/month/year) |
|---|---|---|---|---|---|---|---|
| CN | 108539124 | A | 14 September 2018 | | None | | |
| CN | 109244355 | A | 18 January 2019 | CN | 109244355 | B | 24 August 2021 |
| CN | 112018324 | A | 01 December 2020 | WO | 2020238628 | A1 | 03 December 2020 |
| | | | | CN | 112018324 | B | 30 July 2021 |
| | | | | CN | 113488613 | A | 08 October 2021 |
| CN | 101138058 | A | 05 March 2008 | EP | 1865521 | A1 | 12 December 2007 |
| | | | | EP | 1865521 | A4 | 23 February 2011 |
| | | | | JP | WO2006112068 | A1 | 27 November 2008 |
| | | | | JP | 4833065 | B2 | 07 December 2011 |
| | | | | CN | 101138058 | B | 30 March 2011 |
| | | | | US | 2009154064 | A1 | 18 June 2009 |
| | | | | US | 7733629 | B2 | 08 June 2010 |
| | | | | WO | 2006112068 | A1 | 26 October 2006 |
| | | | | KR | 20070021126 | A | 22 February 2007 |
| US | 2018076451 | A1 | 15 March 2018 | US | 10516160 | B2 | 24 December 2019 |
| | | | | KR | 20180028814 | A | 19 March 2018 |
| | | | | KR | 102122467 | B1 | 12 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011401161